# EUROPEAN PATENT APPLICATION

(11) **EP 4 080 442 A1**
(43) Date of publication of application: **26.10.2022**
(21) Application number: 21744899.2
(22) Date of filing: 12.01.2021
(51) Int. Cl.: G06Q 50/02

(54) **LIVESTOCK RAISING INFORMATION MANAGEMENT SYSTEM, LIVESTOCK RAISING INFORMATION MANAGEMENT SERVER, LIVESTOCK RAISING INFORMATION MANAGEMENT METHOD, AND LIVESTOCK RAISING INFORMATION MANAGEMENT PROGRAM**

(30) Priority: 21.01.2020 JP 2020007263
(71) Applicant: Eco-Pork Co., Ltd., Setagaya-ku Tokyo 154-0016 (JP)
(72) Inventor: ARAFUKA Shinsuke, Tokyo 154-0016 (JP)
(74) Representative: Fédit-Loriot
(86) International application number: PCT/JP2021/000696
(87) International publication number: WO 2021/149538

(57) **Abstract**

A livestock information management system 1 configured to manage information on livestock includes: an information storage unit 121 configured to store event information indicating an event to be conducted for rearing the livestock, event schedule master information defining a timing at which the event is to be conducted, an identifier for identifying the livestock, each individual of a livestock herd, or a livestock herd, status information indicating a status which is a rearing state transitioning by conducting the event on the livestock or the livestock herd identified by the identifier, and history information on a timing at which the status has transitioned; and a livestock extraction unit 111 configured to compare the history information and the event schedule master information with each other, determine whether or not the event has been conducted on the livestock or the livestock herd, and extract, if the determination is no, the livestock or the livestock herd as target livestock on which the event has not been conducted.

## Description

### TECHNICAL FIELD

The present disclosure relates to a livestock information management system, a livestock information management server, a livestock information management method, and a livestock information management program which are for managing records of information on works (events), such as mating (breeding), a pregnancy test, a childbirth, weaning, feeding, or medication, conducted on livestock in a livestock industry.

### BACKGROUND ART

In a livestock industry, management of rearing history information on livestock has been required in order to ensure food safety and efficiently increase productivity. The rearing history information has been typically managed, but the user needs to conduct works such as recording of the information on paper in a livestock barn or the like and inputting of the information into a computer. However, several thousands to several tens of thousands of livestock are handled depending on the type of livestock. Thus, management of an enormous number of pieces of history information causes problems such as an increase in management load and the possibility of erroneous input of information.

Patent Document 1 describes the following technique as a technique for reducing loads of works of inputting livestock industry history information at livestock farming places. When the user specifies a date and a group and performs the operation of inputting feeding and medication histories, a plan corresponding to the specified group is referred to, feeding and medication schedules close to the specified date are recognized, and scheduled feed and drug names are presented as input candidates. Then, when the user checks and confirms them, the history of use of the scheduled feed and drug names presented as the input candidates are automatically registered in a history data storage unit.

### CITATION LIST

### PATENT DOCUMENT

PATENT DOCUMENT 1: Japanese Unexamined Patent Publication No. 2006-158280

### SUMMARY OF THE INVENTION

### TECHNICAL PROBLEM

However, the technique described in Patent Document 1 is for presenting the history information which can be the input candidates in accordance with a raising plan, the user needs to manage whether or not events (works) have been conducted on an enormous number of livestock, and a third party cannot check the results of the events conducted. In addition, there has been no idea of visualizing changes in the rearing state (status) of livestock due to the events so that the changes can be recognized. For this reason, the current status cannot be sequentially grasped, and improvement in operation efficiency in the livestock industry cannot be expected.

The present disclosure was made in view of the foregoing problems, and it is an objective of the present disclosure to provide a livestock information management system, a livestock information management server, a livestock information management method, and a livestock information management program which can manage events (works) conducted on an enormous number of livestock and check the results of the events conducted as statuses, thereby improving livestock productivity.

### SOLUTION TO THE PROBLEM

In order to achieve the objective, a livestock information management system for managing information on livestock includes: an information storage unit configured to store event information indicating an event to be conducted for rearing the livestock, event schedule master information defining a timing at which the event is to be conducted, an identifier for identifying the livestock, each individual of a livestock herd, or a livestock herd, status information indicating a status which is a rearing state transitioning by conducting the event on the livestock or livestock herd identified by the identifier, and history information on a timing at which the status has transitioned; and a livestock extraction unit configured to compare the history information and the event schedule master information with each other, determine whether or not the event has been conducted on the livestock or the livestock herd, and extract, if the determination is no, the livestock or the livestock herd as target livestock on which the event has not been conducted.

In order to achieve the objective, a livestock information management system for managing information on livestock includes: an input unit to be operated by the user; and an information storage unit configured to store an identifier for identifying the livestock, each individual of a livestock herd, or a livestock herd and status information indicating a status which is a rearing state of the livestock or livestock herd identified by the identifier; a status management unit configured to update the status information by performing an operation of causing the status of the livestock or the livestock herd to transition to an abnormal status with the input unit when an abnormality has occurred in the livestock or the livestock herd; and a livestock extraction unit configured to extract, by using the status information, the livestock or livestock herd whose status has transitioned to the abnormal status as target livestock. The status management unit updates the status information when information on an event conducted on the target livestock to address the abnormality is input with the input unit.

In order to achieve the objective, a livestock information management system for managing information on livestock includes: an information storage unit configured to store event information indicating an event to be conducted for rearing the livestock, an identifier for identifying the livestock, each individual of a livestock herd, or a livestock herd, and status information indicating a status which is a rearing state transitioning by conducting the event on the livestock or livestock herd identified by the identifier; and a record generation unit configured to generate a record regarding the status by using the number of livestock on which the event has been conducted or the number of livestock belonging to the livestock herd on which the event has been conducted and the number of livestock whose status has transitioned after the conduct of the event or the number of livestock belonging to the livestock herd whose status has transitioned after the conduct of the event.

In order to achieve the objective, a livestock information management server for managing information on livestock includes: an information storage unit configured to store event information indicating an event to be conducted for rearing the livestock, event schedule master information defining a timing at which the event is to be conducted, an identifier for identifying the livestock, each individual of a livestock herd, or a livestock herd, status information indicating a status which is a rearing state transitioning by conducting the event on the livestock or livestock herd identified by the identifier, and history information on a timing at which the status has transitioned; and a livestock extraction unit configured to compare the history information and the event schedule master information with each other, determine whether or not the event has been conducted on the livestock or the livestock herd, and extract, if the determination is no, the livestock or the livestock herd as target livestock on which the event has not been conducted.

In order to achieve the objective, a livestock information management server for managing information on livestock includes: an input unit to be operated by the user; an information storage unit configured to store an identifier for identifying the livestock, each individual of a livestock herd, or a livestock herd and status information indicating a status which is a rearing state of the livestock or livestock herd identified by the identifier; a status management unit configured to update the status information by performing an operation of causing the status of the livestock or the livestock herd to transition to an abnormal status with the input unit when an abnormality has occurred in the livestock or the livestock herd; and a livestock extraction unit configured to extract, by using the status information, the livestock or livestock herd whose status has transitioned to the abnormal status as target livestock. The status management unit updates the status information when information on an event conducted on the target livestock to address the abnormality is input with the input unit.

In order to achieve the objective, a livestock information management server for managing information on livestock includes: an information storage unit configured to store event information indicating an event to be conducted for rearing the livestock, an identifier for identifying the livestock, each individual of a livestock herd, or a livestock herd, and status information indicating a status which is a rearing state transitioning by conducting the event on the livestock or livestock herd identified by the identifier; and a record generation unit configured to generate a record regarding the status by using the number of livestock on which the event has been conducted or the number of livestock belonging to the livestock herd on which the event has been conducted and the number of livestock whose status has transitioned after the conduct of the event or the number of livestock belonging to the livestock herd whose status has transitioned after the conduct of the event.

In order to achieve the objective, a livestock information management method for managing information on livestock includes: a livestock extraction step of comparing history information on a timing at which a status indicating a rearing state of the livestock or a livestock herd has transitioned with event schedule master information defining a timing at which an event is to be conducted for rearing the livestock, determining whether or not the event has been conducted on the livestock or the livestock herd, and, if the determination is no, extracting the livestock or the livestock herd as target livestock on which the event has not been conducted, by a livestock extraction unit.

In order to achieve the objective, a livestock information management method for managing information on livestock includes: a status input step of updating, according to an instruction by a user, a status indicating a rearing state of the livestock or a livestock herd so as to transition to an abnormal status when an abnormality has occurred in the livestock or the livestock herd, by a status management unit; a livestock extraction step of extracting, by a livestock extraction unit, the livestock or livestock herd whose status has transitioned to the abnormal status as target livestock by using the status; and a status management step of updating the status by the status management unit when information on an event conducted on the target livestock to address the abnormality is input with the input unit according to an instruction by the user.

In order to achieve the objective, a livestock information management method for managing information on livestock includes: a record generation step of generating a record regarding the status by a record generation unit by using the number of livestock on which the event has been conducted or the number of livestock belonging to the livestock herd on which the event has been conducted and the number of livestock whose status which is a rearing state has transitioned after the conduct of the event or the number of livestock belonging to the livestock herd whose status has transitioned after the conduct of the event.

In order to achieve the objective, a livestock information management program for managing information on livestock causes a computer to execute: a livestock extraction step of comparing history information on a timing at which a status indicating a rearing state of the livestock or a livestock herd has transitioned with event schedule master information defining a timing at which an event is to be conducted for rearing the livestock, determining whether or not the event has been conducted on the livestock or the livestock herd, and, if the determination is no, extracting the livestock or the livestock herd as target livestock on which the event has not been conducted, by a livestock extraction unit.

In order to achieve the objective, a livestock information management program for managing information on livestock causes a computer to execute: a status input step of updating, according to an instruction by a user, a status indicating a rearing state of the livestock or a livestock herd so as to transition to an abnormal status when an abnormality has occurred in the livestock or the livestock herd, by a status management unit; a livestock extraction step of extracting, by a livestock extraction unit, the livestock or livestock herd whose status has transitioned to the abnormal status as target livestock by using the status; and a status management step of updating the status by the status management unit when information on an event conducted on the target livestock to address the abnormality is input with an input unit according to an instruction by the user.

In order to achieve the objective, a livestock information management program for managing information on livestock causes a computer to execute: a record generation step of generating a record regarding the status by a record generation unit by using the number of livestock on which the event has been conducted or the number of livestock belonging to the livestock herd on which the event has been conducted and the number of livestock whose status which is a rearing state has transitioned after the conduct of the event or the number of livestock belonging to the livestock herd whose status has transitioned after the conduct of the event.

### ADVANTAGES OF THE INVENTION

According to the present disclosure including the foregoing means, the history information is compared with the timing at which the event is to be conducted, determination on whether or not the event has been conducted on the livestock or the livestock herd is made, and if the determination is no, the livestock or the livestock herd is extracted as the target livestock. Thus, determination on whether or not events (works) have been conducted on an enormous number of livestock can be managed by the system without inputting the results of the events by the user.

### BRIEF DESCRIPTION OF THE DRAWINGS

FIG. 1 is a system configuration diagram illustrating a livestock information management system according to an embodiment.
FIG. 2 is a view illustrating an example of event interval information.
FIG. 3 is a chart illustrating an example of a livestock status transition flow included in event schedule master information.
FIG. 4 is a flowchart illustrating the flow of processes of a first embodiment.
FIG. 5 illustrates an example of a terminal screen displayed as an alert.
FIG. 6 illustrates an example of a terminal screen displayed as a list.
FIG. 7 is a flowchart illustrating the flow of processes of a second embodiment.
FIG. 8 is a flowchart illustrating the flow of processes of a third embodiment.
FIG. 9 is a schematic block diagram illustrating the configuration of a computer.

### DESCRIPTION OF EMBODIMENTS

Embodiments of the present disclosure will now be described below with reference to the drawings. Note that the configuration and information that can be commonly used in the first to third embodiments among the present embodiments will be described, and then, each embodiment will be described.

First, the term "livestock" generally refers to only animals such as cattle, horses, sheep, goats, and pigs, and do not include birds such as poultry. However, a target to be managed by using a livestock information management system disclosed in the present embodiments is not limited to these animals, and may be poultry which is also a livestock product. Poultry refers to birds such as chickens, quails, ducks, and wild ducks. The following description will be made assuming that target livestock products to be managed by the livestock information management system disclosed in the present embodiments may include poultry, unless otherwise specified.

In the embodiments of the present disclosure described below, pigs are mainly taken as an example of livestock. In the livestock industry, the number of pigs raised in a single farm may range from several thousands to several tens of thousands, the burden of managing such an enormous number of livestock is large, and events and the like may be erroneously performed on the pigs.

In the present embodiments, terms and the like in a case where livestock other than pigs is to be a target may be read as follows for, for example, cattle and horses. A barn which is a facility where the livestock products are reared may be read as a pig house for pigs, a cattle barn for cattle, and a stable for horses. A livestock pen which is a unit of a partitioned section in the barn is a pig pen for pigs, a cattle pen for cattle, and a horse pen for horses. Females for breeding of breeding livestock are mother pigs (or breeding mother pigs) for pigs, mother cattle (or breeding mother cattle) for cattle, and female horses (breeding female horses) for horses. Males for breeding of breeding livestock are boars (breeding boars) for pigs, breeding bulls for cattle, and breeding male horses for horses.

### <Configuration>

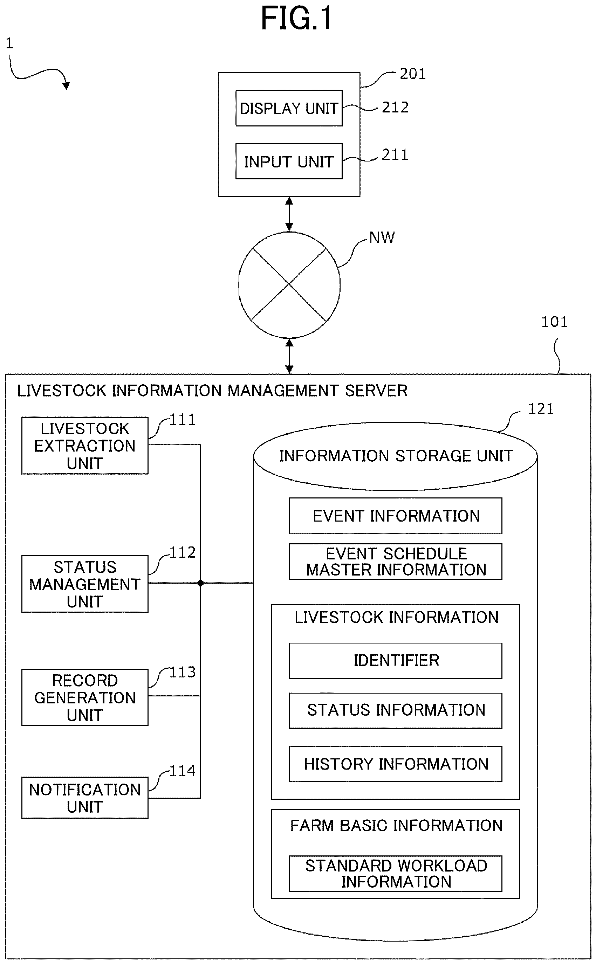

FIG. 1 is a system configuration diagram illustrating a livestock information management system 1 including a livestock information management server 101 according to an embodiment of the present disclosure. As shown in FIG. 1, in the livestock information management system 1 according to the embodiment of the present disclosure, the livestock information management server 101 and a terminal device 201 used by a user are connected to each other so as to communicate with each other via a network NW. For simplification of description, FIG. 1 illustrates only one terminal device 201 assuming one user, but the livestock information management server 101 is connectable to multiple terminals of multiple users via the network NW

The livestock information management system 1 is a system for supporting management of livestock information, mainly performed by a livestock raiser. An operator of the livestock information management system provides a service for supporting management of the livestock information to a livestock raiser using the system. The operator can provide services to multiple livestock raisers. The livestock information management server 101 is managed by the operator of the livestock information management system 1, and the livestock raiser uses the terminal device 201. The livestock information management server 101 may be managed by the livestock raiser oneself.

The terminal device 201 is, for example, a device such as a PC, a smartphone, a tablet PC, and a mobile phone. The terminal device 201 may access a livestock information management server 101 via dedicated application software installed in the terminal. Alternatively, the terminal device 201 may access the livestock information management server 101 by using an operating environment (e.g., an application programming interface (API), and a platform) provided by the livestock information management server 101.

An input unit 211 is, for example, a device that can be operated by a user to input or select information, such as a keyboard, a mouse, a track ball, or a touch pad. Alternatively, a touch panel integrated with the display unit 212 such as a liquid crystal display or an organic EL display in a smartphone, a tablet, or a PC may be used. The input unit 211 may also be a voice input unit.

A display unit 212 is, for example, a display device that displays information or the like to the user. The display unit 212 may be a display device independent of the terminal device 201, or may be a display device such as a liquid crystal display or an organic EL display in a smartphone or a tablet.

The terminal device 201 may be integrated with the livestock information management server 101 without using the network NW

As shown in FIG. 1, the livestock information management system 1 according to the present embodiment is configured by connecting the terminal device 201, which is a terminal device to be used by a user, and the livestock information management server 101 via the network NW such as the Internet and a virtual private network (VPN). For simplification of description, FIG. 1 illustrates only one terminal device 201 assuming one user, but the livestock information management server 101 is connectable to two or more terminal devices of two or more users via the network NW. The single terminal device may be used by multiple users.

The livestock information management server 101 includes a livestock extraction unit 111, a status management unit 112, a record generation unit 113, a notification unit 114, and an information storage unit 121. These units will be described in detail in descriptions of the embodiments.

The information storage unit 121 is a storage device which stores information to be used to perform management by the livestock information management system 1. As the information, information on livestock or a livestock herd, information on facilities such as farms and barns, information on materials such as feeds and drugs, and information on operations of a livestock industry such as events and statuses to be described later are stored. In FIG. 1, the information storage unit 121 is integrated with the livestock information management server 101, but may be a storage device physically separated from the livestock information management server 101. Information stored in the information storage unit 121 will now be described below.

The livestock information includes information on livestock, such as breeding livestock information and non-breeding livestock information. The livestock is mainly divided into breeding livestock and non-breeding livestock. Pigs include breeding pigs and non-breeding pigs. The breeding pigs are pigs raised to give birth to piglets. The non-breeding pigs are pigs (fattening pigs) raised to be shipped after growth. Information on breeding pigs is stored as breeding pig information, and information on non-breeding pigs is stored as non-breeding pig information. The breeding pigs include mother pigs (sows for breeding) and boars (boars for breeding), and managed with individual identifiers (individual IDs) given to the respective breeding pigs. The identifier may be any of a unique name, number, or the like of the livestock as long as the livestock can be identified. The breeding pigs may be managed with group identifiers (group IDs) in which individual breeding pigs are grouped, given to the respective breeding pigs. Information on the group is stored as group information. The non-breeding pigs may be managed with groups or lot identifiers (lot IDs) in which multiple groups are grouped as lots. The non-breeding pig information includes information on groups or lots including multiple newborn livestock groups scheduled to be mainly shipped as porkers. The breeding pig information and the non-breeding pig information include status information indicating a rearing state of the livestock or the livestock herd associated with identifiers for identifying the livestock or the livestock groups, and history information indicating a timing which is a time and a date when a status transition occurs. The breeding pig information and the non-breeding pig information further include livestock count information on the number of livestock.

The breeding pig information further include mother pig information which is information on mother pigs which are sows for breeding, and boar/semen information which is information on boars which are boars for breeding or semen.

The mother pig information is a list of pigs registered as mother pigs, and in the list, basic individual information, the status information, and the history information are associated with the identifier of each mother pig. The individual information includes, for example, age in month, the number of births, a birth history, the number of babies born, a farm name, a pig house name, a room name, a pig pen name, a breed, an introduction date, a procurement source, parent pig information (a mother pig number, a boar number), a birth date, an age in day on the introduction date, and a weight on the introduction date.

The status information on mother pig includes, as a normal status, bred, pregnant, nursing, weaning, and estrus, for example. An abnormal status includes, for example, re-estrus, a delayed pregnancy test, non-pregnant, miscarriage, delayed childbirth, delayed weaning, un-estrus/poor physical condition, delayed breeding, and death. The status information includes these statuses as history information where timings which are the dates and times of transition to these statuses are associated with these statuses.

The boar/semen information is a list of boars reared in the farm and semen thereof, where individual information is associated with the identifiers of boars and semen. The individual information includes information such as a category, a breed, an introduction date, a procurement source, a birth date, an age in day on the introduction date, a weight on the introduction date, and a pedigree number. The boar/semen information further includes, as a history information, statuses and timings which are the dates and times of transition to these statuses.

The group information is a list of groups where sets of multiple livestock are defined as groups, and in the list, individual information on each group is associated with each group identifier. The group information includes status information indicating a status which is a rearing state common to the livestock belonging to each group, and timing information such as date and time when the status transitions.

In the non-breeding pig information, herd information is associated with the lot name (group identifier) collectively given to multiple piglets. The herd information includes information such as a farm name, a pig house name, a room name, a pig pen name, a lot formation date (herd formation date), the current number of rearing pigs, external introduction, and a weaning group name (group identifier). The status information of the non-breeding pig information includes statuses related to weaning, fattening, feeding, medication, shipping, and the like. The status information further includes, as history information, timings which are the dates and times of transition to these statuses.

The livestock count information includes information on the number of breeding livestock, the number of non-breeding livestock, and the number of livestock belonging to a group. The number of livestock can be calculated, for example, by counting identifiers given to each livestock. In addition, by referring to the history information, the number of livestock or the number of livestock belonging to a livestock herd at a predetermined timing can also be calculated.

Farm basic information is information related to the entire business of the livestock raisers, and includes information on farms, pig houses, rooms, pig pens, and the like, breed information on pigs handled in the farms, reasons for disuse, the type of feed (feed information), drug information, hormone information, vaccine information, and shipping destination information. The farm basic information further includes resource information and employee information.

The resource information is information set for human resources such as employees and physical resources such as materials, and is information for setting necessary resources (people/materials) for event/inter-event unit to be described later. For the people, detailed information such as skills necessary for performing the event may be set. For materials, materials necessary for each event/inter-event unit and constraint conditions such as the number of available materials/time zone may be set.

The employee information includes the number of employees belonging to the farm, skills of the employees, working days, and the like.

In the present embodiment, the event is a work conducted for rearing on livestock or a livestock herd belonging to each category of breeding livestock or non-breeding livestock. The rearing generally refers to feeding and growing animals, and works which are not directly related to rearing, such as shipping, are not included in the meaning of this term. However, the purpose of rearing livestock by livestock raisers is to obtain economic benefits, unlike rearing pets in general households. Thus, works, such as shipping, performed for the purpose of rearing is included in the work (event) performed for rearing livestock as the event of the present embodiment.

For example, when the event is performed on livestock in the category of female breeding livestock, the events indicate works such as mating (including real mating, artificial insemination (AI), and embryo transfer (ET), also referred to as breeding), childbirth, weaning, a pregnancy test, adoption (nursed pigling), and an estrus/physical condition check.

The following describes each event. The real mating is an event in which a boar is mated with a mother pig. The artificial insemination is an event of mating on a mother pig with semen. The childbirth is an event of normal birth of a mother pig. Acceptance is an event of accepting pigs such as breeding candidate pigs. Acclimatization is an event in which newly introduced pigs or pigs whose environment have changed, such as moving through a pig house, is acclimatized to the new environment. Feeding is an event of feeding individual pigs or a herd (group or a lot that is a collection of groups). Medication is an event of administering a drug to target individual pigs or herd (a group or a lot). Moving is an event of moving target individual pigs or a herd (a group or a lot) to a different barn, room, or a livestock pen (a pig house, a room, or a pig pen). A hormone/physical treatment is an event of administering a hormone to a mother pig to promote estrus. The pregnancy test is an event of testing, by a veterinarian, whether or not a mother pig is pregnant using a diagnostic device or the like after mating. Vaccination is an event of administering a vaccine to target individual pigs or herd (group or lot that is a collection of groups). Start of nursing is an event in which a mother pig starts nursing her babies after childbirth. Adoption (nursed pigling) is an event in which the number of piglets nursed by a mother pig after childbirth is controlled, and an event in which piglets are adopted or moved to be nursed by other mother pigs. Weaning is an event of moving piglets to a weaning house after the nursing period of the mother pig. Semen collection is an event of collecting semen from boars. Death determination is an event of determining that target livestock or livestock herd (a group or a lot that is a collection of groups) has died. Shipping is an event of shipping target individual pigs or herd (a group or a lot that is a collection of groups). Disuse is an event of discarding pigs that are no longer worth rearing among target individual pigs or herd (a group or a lot that is a collection of groups). All-out is an event of cleaning and disinfecting facilities, such as a pig house, which have become empty after shipping. Candidate pig sorting is an event of sorting growing pigs to be mother pig candidates among piglets.

The events are not limited to the works described above, and may include other items.

In the present embodiment, the status indicates a rearing state of livestock, which transitions according to the result of the event conducted. The status is the result of the event conducted, and may be a number of different results. The livestock information management system 1 does not determine the status to which the current status is to transition or the result itself of the event. The status transition is determined in the order in which the event is to be conducted, which is defined in event schedule master information in accordance with the result of information selected and input by the user. Conduct of the event is stored in an information storage unit 121 by selection and input performed by the user with the input unit 211 of the terminal device 201 shown in FIG. 1. When the conduct of the event is registered, the status transitions as a result of the information selected and input. The status transition and the timing thereof are stored in the information storage unit 121 as status information and history information thereof.

Among the statuses, in particular, a state scheduled for rearing livestock is referred to as a normal status. On the other hand, a state which is expected in rearing of livestock but is not preferable for a livestock raiser is referred to as an abnormal status.

The normal status for the state of livestock in the category of female breeding livestock indicates, for example, states of being bred, in nursing, in weaning, pregnant, and in estrus.

The abnormal status for the state of livestock in the category of female breeding livestock indicates, for example, states of delayed childbirth, delayed weaning, delayed breeding, re-estrus, miscarriage, disease, death, a delayed pregnancy test, non-pregnant, and un-estrus/poor physical condition.

The following describes the statuses. Being bred indicates a state in which a mother pig has been bred, i.e., mated. Being pregnant indicates a state in which a fertilized egg has been imbedded and confirmed by a pregnancy test. Being in nursing is a state in which a mother pig is nursing her baby after childbirth. Being in weaning is a state from the end of the nursing period of the mother pig to confirmation of the return of estrus. being in estrus is a state in which the weaning phase has ended and normal return to estrus has been confirmed by an estrus/physical condition check. The re-estrus is a state in which a mother pig has failed to be mated and is in re-estrus behavior. The delayed pregnancy test is a state in which a pregnancy test is delayed. The non-pregnant is a state in which it has been confirmed by a pregnancy test that a mother pig is not pregnant. The miscarriage is a state in which a mother pig was pregnant but had a miscarriage without giving a birth. The disease is a state in which a rearing pig is affected with a disease. The delayed childbirth is a state in which the childbirth of a pregnant mother pig is delayed. The delayed weaning is a state in which weaning is delayed. The delayed breeding is a state in which breeding is delayed. The death is a state in which the livestock has died.

The statuses are not limited to the states described above, and may include other items.

The event information includes information on the events described above.

The event schedule master information includes a livestock status transition flow indicating an order and a route in which livestock in a certain status after a certain event has been conducted should next transition to. Specifically, the event schedule master information includes a normal status transition flow indicating a route in which the status of the livestock transitions to the normal status scheduled for rearing the livestock, and an abnormal status transition flow indicating a route in which the status of the livestock transitions to the abnormal status which is a state expected in rearing of livestock but is not preferable and a route in which the status returns from the abnormal status to the normal status.

Further, the event schedule master information includes information defining a timing at which next event is to be conducted after a certain event has been conducted. More specifically, the event schedule master information includes event interval information indicating an interval between events.

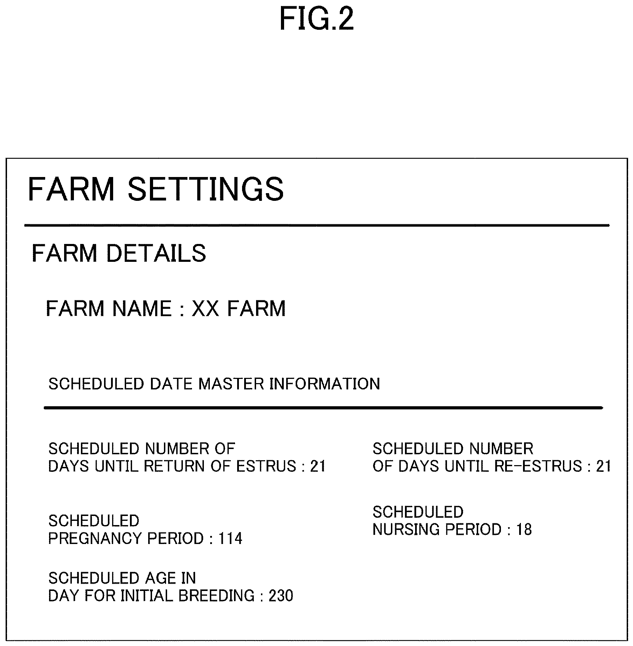

FIG. 2 illustrates an example of the event interval information. The event interval information is stored as scheduled date master information that can be set for each farm. The event interval to be set is, for example, the scheduled number of days until return of estrus, the scheduled number of days until re-estrus, a scheduled pregnancy period (days), a scheduled nursing period (days), and a scheduled age in day for initial breeding. A starting point for calculation of the period (days) is a relative period from a previous event to a next event. The age in day is an age in day from birth or a weaning age in day from the weaning date.

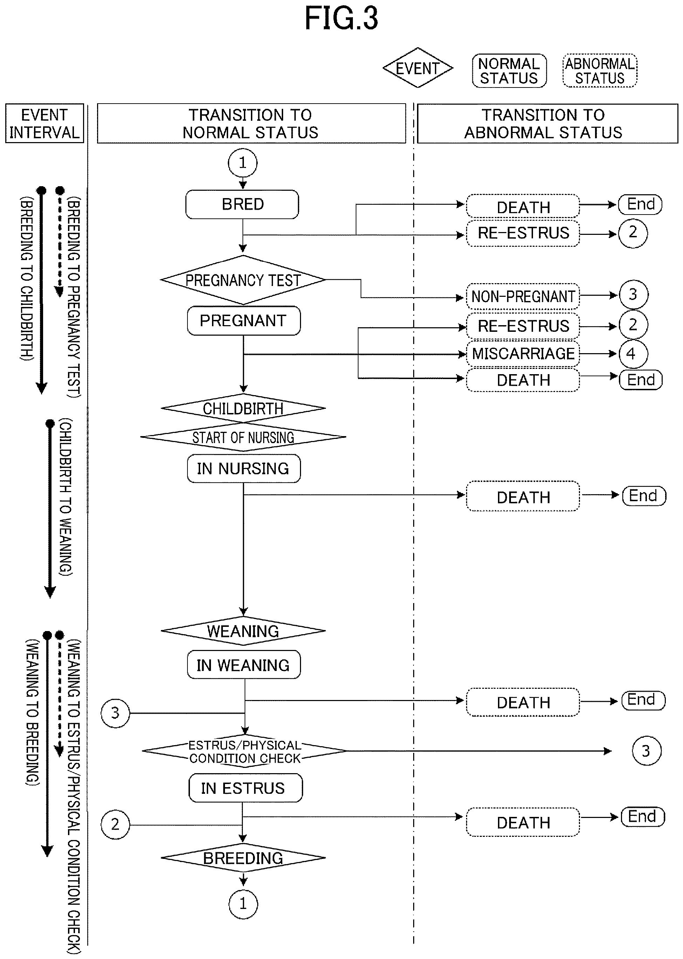

FIG. 3 illustrates a chart showing an example of a livestock status transition flow included in the event schedule master information. In FIG. 3, the event schedule master information includes a normal status transition flow and an abnormal status transition flow, which show a relationship between each event and the status. FIG. 3 shows a mother pig among the livestock, and in addition to this case, a flow corresponding to each livestock category is stored. In FIG. 3, the left half shows the normal status transition flow, and the right half shows the abnormal status transition flow. Event intervals which are intervals between events are indicated by arrows. In FIG. 3, numerals in circles indicate paths for a next event, which are indicated herein as numerals in parentheses (e.g., (1), (2), ...). As described above, a status to which the state of the mother pig transitions in response to the result of each event is determined in accordance with information input by the user.

First, (1) a mother pig after breeding is in a normal status of being bred. A pregnancy test event can be conducted, at a predetermined event interval, on the mother pig which has been bred. The event interval can be appropriately set for each farm. For example, an interval from breeding to the pregnancy test may be set to the number of days equal to or greater than the biological estrus cycle of such livestock. If the status of the mother pig transitions to an abnormal status of re-estrus before the pregnancy test is conducted, the route is taken such that re-breeding is conducted in (2). If the status of the mother pig transitions to an abnormal status of death for some reasons, the mother pig is disused, and the management ends (End). The disuse event due to the death status occurs irregularly. Thus, the description thereof will be omitted below.

The pregnancy test event is conducted to determine whether the mother pig is pregnant or non-non-pregnant. If the status of the mother pig transitions to an abnormal status of non-pregnant in response to the result of the pregnancy test, the route is taken such that an estrus/physical condition check is conducted in (3).

If the status of the mother pig transitions to a normal status of being pregnant, the route is taken such that childbirth is conducted at a predetermined event interval from the breeding date. The event interval from the breeding date to the childbirth can be set appropriately for each farm depending on the biological pregnancy period of the livestock. The mother pig in the status of being pregnant may take a route of transitioning to an abnormal status of re-estrus or miscarriage in addition to the death before reaching a childbirth event. If the status of the mother pig transitions to an abnormal status of re-estrus, the route is taken such that breeding is conducted in (2). If the status of the mother pig transitions to an abnormal status of miscarriage, the route is taken such that the estrus/physical condition check is conducted in (3).

If the mother pig in the status of being pregnant has passed through the pregnancy period successfully and conducted a childbirth event, a piglet(s) is delivered. The mother pig which has delivered the piglet(s) by childbirth conducts a nursing start event on the piglet(s), and the status of the mother pig transitions to a normal status of being in nursing.

When the nursing period from the start of nursing ends, the mother pig conducts a weaning event. After weaning, the status of the mother pig transitions to a normal status of being in weaning.

On the mother pig in the status of being in weaning, an estrus/physical condition check can be conducted as an event. If it was confirmed by the estrus/physical condition check event that the mother pig has no problem in estrus and physical condition, the status of the mother pig transitions to a normal status of being in estrus.

For the mother pig in the status of being in estrus, the route is taken such that a breeding event is conducted. The event interval from weaning to breeding can be set appropriately. For the mother pig on which the breeding has been conducted, the route continues to (1). As described above, for a breeding cycle of mother pigs, a work path based on the event and the status is defined by the livestock status transition flow in the event schedule master information.

The above-described breeding status transition flow is an example of the event schedule master information, and particularly relates to some of mother pigs which are breeding livestock. The statuses of boars and fattening pigs which are non-breeding livestock are also stored in the information storage unit 121 as event schedule master information.

The event information further includes standard workload information. The standard workload information includes network work flow information, and workload/unit information.

The network work flow information includes, for example, information on an event unit which is each work such as breeding and a pregnancy test or information on links among event units, and is information defining a combination of event units and inter-event units with links up to completion of a series of works by joining and branching of works in a work flow of livestock production as a network with an event unit as a node.

The workload/unit information is information in which a workload which is a necessary work time and a unit that is a work target are set for each event unit. The workload/unit information is, for example, a workload per unit livestock or livestock herd. Thus, a necessary work time can be estimated by using the livestock count information in addition. Further, for each inter-event unit, a time interval which is a lead time from a previous event to a next event and a condition for proceeding to the next event are set.

### (First Embodiment)

A first embodiment of the present disclosure will now be described below. In the first embodiment, alert target livestock is extracted and presented based on status information and status transition information on livestock or livestock herd satisfying predetermined conditions among statuses indicating a rearing state of livestock, and countermeasures are received. This allows not only alerting of omission of an enormous number of events scheduled to be conducted on livestock rearing, but also reliable reduction in omission by causing the user to address the alert immediately.

The livestock extraction unit 111 shown in FIG. 1 functions to compare history information with the timing and order at which an event defined in the event schedule master information is to be performed by using information stored in the information storage unit 121, determine whether or not the event has been conducted correctly on the livestock or livestock herd, and extract, if the determination is no, the livestock or livestock herd as target livestock on which the event has not been conducted.

The livestock extraction unit 111 calculates an interval from the timing when the status of the livestock or the livestock herd has transitioned to the timing of extraction by using the history information, compares the interval with the event interval defined in the event interval information, and determines whether or not the event has been conducted on the livestock or the livestock herd.

The livestock extraction unit 111 further functions to calculate workload information by using the number of livestock or the number of livestock herds corresponding to the extracted target livestock and the standard workload information stored in the information storage unit 121 and extract target livestock on which the event has not been conducted at the timing corresponding to the workload information.

The status management unit 112 functions to display the target livestock on the display unit 212 by using information on the target livestock extracted by the livestock extraction unit 111, and update the status information or withdraw the displaying of the target livestock by using information input with the input unit 211 for the result of the event conducted on the target livestock.

The notification unit 114 functions to notify the user of the target livestock extracted by the livestock extraction unit 111 as a list and/or an alert.

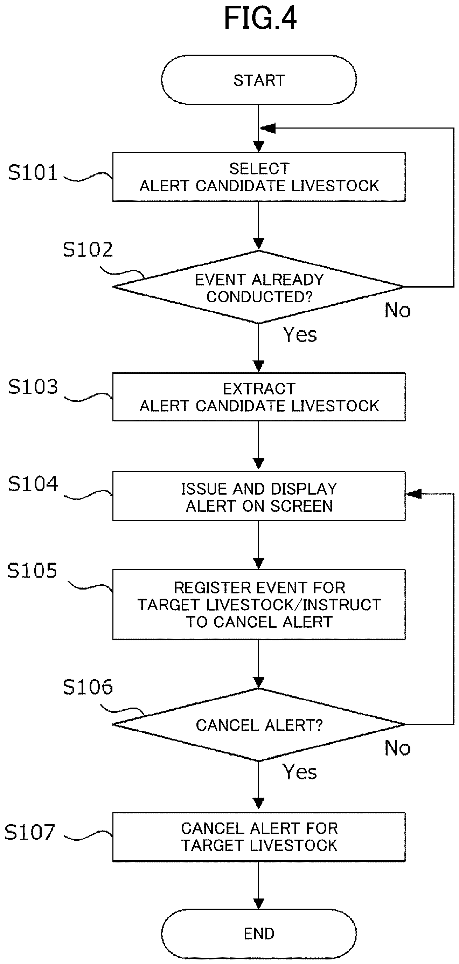

The process flow of the first embodiment will now be described below. FIG. 4 is a flowchart illustrating the flow of the processes of the first embodiment.

In Step S101, the livestock extraction unit 111 selects livestock that can be candidates for alert target livestock. First, for a predetermined item, the livestock extraction unit 111 selects livestock on which a predetermined event has been conducted, which is thus in a predetermined status, and on which a next event is to be conducted. Specifically, for example, mother pigs on which a breeding event has been conducted and which are thus in the status of being bred are selected. In order to extract such mother pigs, the breeding pig information stored in the information storage unit 121 is referred to, and mother pigs in the status of being bred are selected. Then, the time and the number of days, which are a time elapsed from a previous status transition timing to an extraction timing for the selected mother pigs, are calculated as an interval from the previous event. Specifically, for example, the number of days from a breeding date to a date on which the extraction process is conducted is calculated.

In Step S102, the livestock extraction unit 111 extracts alert target livestock among the candidate livestock. The time and the number of days elapsed from the previous status transition timing to a current processing time point for the mother pigs are compared with the timing when an event included in the event schedule master information is to be conducted. As the timing when the event is to be conducted, the scheduled number of days from the breeding to the pregnancy test defined as the event interval information is specifically used.

The livestock extraction unit 111 determines whether or not the event has been conducted on the livestock or livestock herd by the comparison. Specifically, if the time and the number of days elapsed from the previous status transition timing to the current processing time point for the mother pigs exceeds the scheduled number of days from the breeding to the pregnancy test defined as the event interval information, it is determined that the mother pigs are livestock on which the pregnancy test has not been conducted.

In addition, the timing at which the event is to be conducted may be calculated by using the standard workload information. The workload/unit information included in the standard workload information includes a workload per event unit, specifically a time necessary for a pregnancy test of one mother pig. The workload/unit information further includes a workload per inter-event unit, specifically a lead time form a pregnancy test work for certain livestock to a pregnancy test work of next livestock. Further, the network work flow information includes information on links per event unit of a series of events. The resource information includes information set for human resources such as employees and physical resources such as materials. A workload necessary to complete all pregnancy tests for target livestock can be calculated by using these pieces of information in consideration of materials such as an ultrasonic diagnostic machine necessary for the pregnancy test and a veterinarian's schedule. The target livestock can be extracted so as to notify the user at a timing at which the workload can be sufficiently secured or at a timing with a margin according to the workload.

In Step S103, the livestock extraction unit 111 extracts, as target livestock to be presented to the user, livestock which is determined as the event having not been conducted thereon.

In Step S104, the status management unit 112 displays, as an alert, the target livestock extracted by the livestock extraction unit 111 on the screen of the display unit 212 of the terminal device 201.

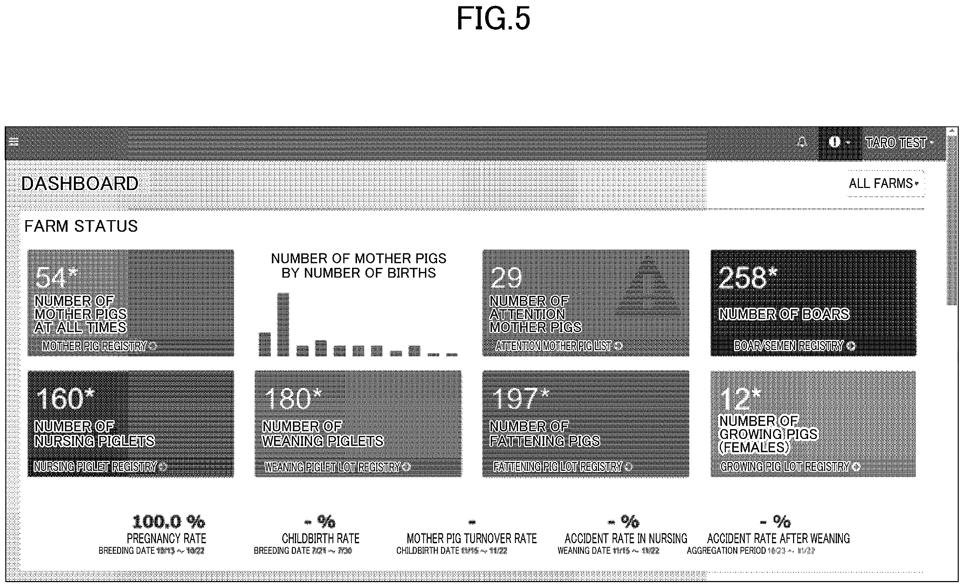

FIG. 5 illustrates an example of a terminal screen displayed as an alert. Among indexes indicating a management status of each livestock industry shown as "DASHBOARD," an item as the number of attention mother pigs is displayed. The number of mother pigs corresponding to the number of attention mother pigs is displayed as 29. When an area displayed as an attention mother pig list in the item of the number of attention mother pigs is operated, the attention mother pig list is displayed.

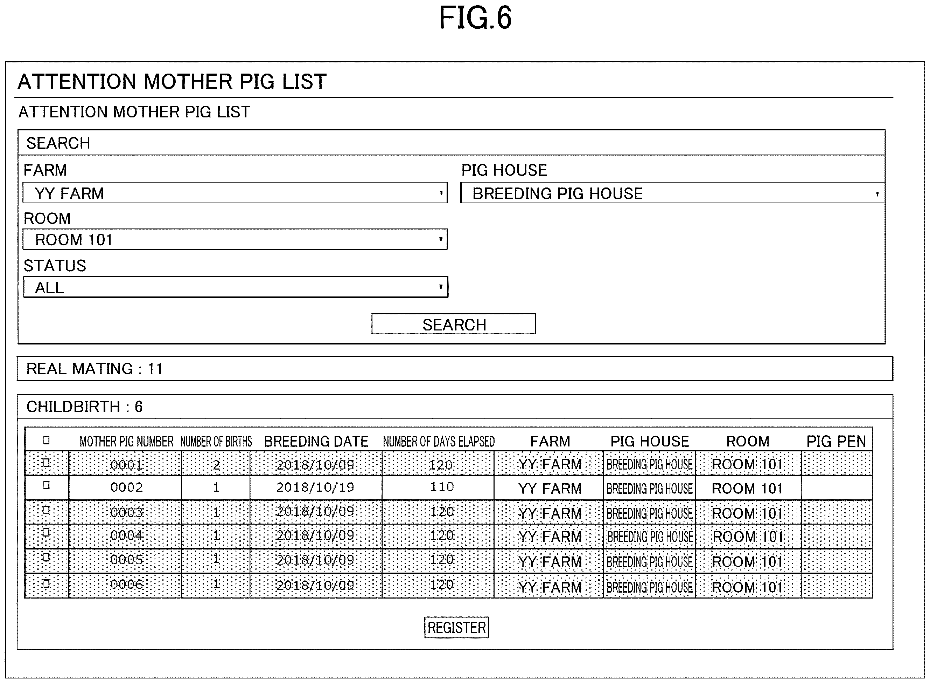

FIG. 6 illustrates the attention mother pig list which is an example of the screen displayed on the display unit 212 of the terminal device 201. On this screen, the attention mother pigs can be sorted and searched by a farm, a pig house, a room, and a situation. Further, as an attention event, real mating and childbirth are displayed, and attention mother pigs regarding the childbirth are displayed as a list. Among the mother pigs displayed, those whose number of days elapsed exceeds a predetermined condition are highlighted by coloring. In this way, the target livestock is presented to the user in the form of an alert or a list.

The alerting may be notified without using the display unit 212 of the terminal device 201. For example, the notification unit 114 can send an e-mail text to the terminal device 201 as an alert. Not only an e-mail but also various message applications can be used to present a notification in text or a notification with a link such as a URL

In Step S105, the user makes registration for conducting the event on the presented target livestock. Specifically, the user inputs, with the input unit 211 of the terminal device 201, the information on the result of the event which has been conducted on the attention mother pigs presented as a list. The status management unit 112 updates the status information by using the information input. Alternatively, an operation of cancelling the alert is performed.

In Step S106, the status management unit 112 refers to the status information on the livestock which is the target of the alert, and determines whether or not the livestock is to be removed from the target of the alert. Specifically, the status is updated by the registration of the information on the result of the event conducted, and the livestock extraction unit 111 no longer extracts livestock on which the event has been conducted as target livestock, and thus, the alert is automatically cancelled. Alternatively, in a case where only the cancellation of the alert is desired, the alert may be actively cancelled by the above-described operation of cancelling the alert.

In Step S107, the alert for the target livestock which has been determined to be removed from the target of the alert is cancelled.

As can be seen from the foregoing, in the livestock information management system according to the first embodiment of the present disclosure, the livestock extraction unit 111 compares the history information stored in the information storage unit 121 with the order and timing at which the event defined in the event schedule master information is to be conducted, determines whether or not the event has been conducted correctly on the livestock or livestock herd, and extracts, if the determination is no, the livestock or livestock herd as the target livestock on which the event has not been conducted. Thus, for example, the user can check livestock on which the event is to be conducted via the display unit 212 of the terminal device 201, thereby eliminating a failure to conduct the event.

Specifically, the livestock extraction unit 111 calculates the interval from the timing when the status of the livestock or livestock herd has transitioned to the extraction by using the history information, compares the interval with the event interval defined in the event interval information, and determines whether or not the event has been conducted on the livestock or livestock herd. Thus, the event can be conducted on the livestock at the optimal timing defined in the event interval information.

The livestock extraction unit 111 further calculates the workload information by using the number of livestock or the number of livestock herds corresponding to the extracted target livestock and the standard workload information, and extracts the target livestock on which the event has not been conducted at the timing corresponding to the workload information. Thus, events can be planned according to limited resources in farms.

Specifically, for example, the target livestock is extracted so that the workload necessary for completing all pregnancy tests for the target livestock within the period is calculated in consideration of the time necessary for conducting the pregnancy test per mother pig, the lead time between the tests, the materials, such as a ultrasonic diagnostic machine, necessary for the pregnancy test, and the veterinarians' schedules, and the user is notified of the extracted livestock at the timing corresponding to the workload.

Further, the target livestock is displayed as a list and/or an alert on the display unit 212. Thus, it is possible to alert the user to the omission of work.

The livestock information management server includes the status management unit 112 configured to update the status information or withdraw the displaying of the target livestock by using the information input with the input unit 211 for the result of the event conducted on the target livestock. This can urge the user to conduct the event, and reduce omission of the work.

### (Second Embodiment)

A second embodiment of the present disclosure will now be described below. In the second embodiment, an input of information on livestock whose status has transitioned to an abnormal status which is expected but suddenly occurs at an unexpected time among statuses indicating a rearing state of livestock is received, such livestock is extracted as alert target livestock to be presented to a user, and registration of conduct of an event corresponding thereto is registered.

The status management unit 112 shown in FIG. 1 functions to extract livestock or livestock herd whose status has transitioned to the abnormal status as target livestock based on the status information by performing an operation of causing the status of the livestock or livestock herd to transition to the abnormal status at the time when an abnormality occurs in the livestock or livestock herd with the input unit 211, and update the status information when information indicating that the event which is a work for addressing the abnormality has been conducted on the target livestock is input with the input unit 211.

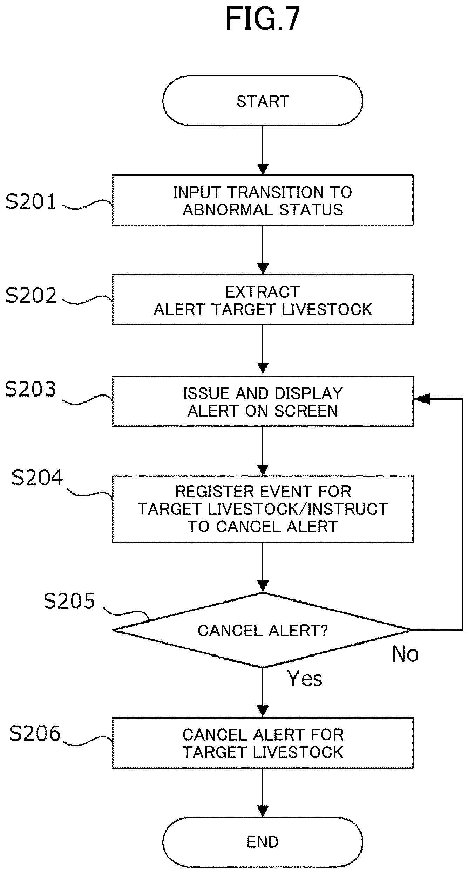

The process flow of the second embodiment will now be described below. FIG. 7 is a flowchart illustrating the flow of the processes of the second embodiment.

In Step S201, the user inputs the transition to the abnormal status with the input unit 211. Specifically, for example, when an abnormality, in which a mother pig in a status of being in breeding is in re-estrus, occurs, the user uses the input unit 211 to input the transition of the status of the mother pig to an abnormal status of being in re-estrus.

In Step S202, the livestock extraction unit 111 extracts target livestock whose status has transitioned to the abnormal status. For a predetermined item, an abnormality has already occurred, and the transition to the abnormal status has been input by the user, and livestock which can be candidates on which a next event is to be conducted is extracted by using the status information. Specifically, for example, mother pigs whose status has transitioned to an abnormal status of being in estrus are extracted.

In Step S203, an alert of the extracted target livestock is issued and displayed on a screen by using the display unit 212 or other means. Specifically, for example, as in FIGS. 5 and 6, the status management unit 112 issues and displays the alert on the screen of the display unit 212 of the terminal device 201.

In Step S204, the user inputs information on the result of the event conducted on the alert target livestock to register the conduct of the event or gives an instruction to cancel the alert. Specifically, when a breeding event is conducted on the mother pig whose status has transitioned to the abnormal status of being in re-estrus, the status transitions to the status of being in breeding so that the mother pig is no longer extracted as target livestock. Alternatively, in a case where the user desires to actively cancel only the alert, the user performs an operation of cancelling the alert.

In Step S205, the status management unit 112 determines whether or not the livestock which is the target of the alert is to be removed from the target of the alert.

In Step S206, the alert for the target livestock which has been determined to be removed from the target of the alert is cancelled. Specifically, the status is updated by the registration of the input information on the result of the event conducted, and the livestock extraction unit 111 no longer extracts livestock on which the event has been conducted as target livestock, and thus, the alert is automatically cancelled. Alternatively, in a case where only the cancellation of the alert is desired, the alert is actively cancelled.

As can be seen from the foregoing, in the livestock information management system according to the second embodiment of the present disclosure, the livestock extraction unit 111 extracts, by using the history information stored in the information storage unit 121, the livestock or livestock herd whose status has transitioned to the abnormal status as the target livestock on which the event is to be conducted, and urges the user to conduct the event via the display unit 212 of the terminal device 201, for example, thereby reducing a failure to conduct the event.

### (Third Embodiment)

A third embodiment of the present disclosure will now be described below. In the third embodiment, a breeding record of livestock can be generated from more accurate results based on a status indicating a rearing state of the livestock and history information indicating the timing of status transition.

For example, there are record items which can be generated by simply dividing a number for the result of events conducted within an aggregation period. For example, the items include the number of babies born alive per month/week, the number of stillbirths per month/week, an accident rate per month/week, and a mother pig turnover rate per month/week. The results and the events and status transition causing the results occur in parallel. Thus, it is enough to aggregate only the results within a predetermined period. On the other hand, when the events and the status transition causing the results are out of the aggregation period, if the records are generated without considering the events and the status transition, the cause cannot be correctly investigated. Specifically, for example, the pregnancy period of breeding livestock which is pregnant is expected to be about 114 days for pigs and about 285 days for cattle, which are long and causes and results occur over a period of time beyond a day or a month.

The record generation unit 113 functions to generate a record regarding the status based on the number of livestock on which the event has been conducted or the number of livestock belonging to a livestock herd on which the event has been conducted and the number of livestock whose status has transitioned after the conduct of the event or the number of livestock belonging to a livestock herd whose status has transitioned after the conduct of the event, by using the information stored in the information storage unit 121.

The notification unit 114 functions to notify the user of the record generated by the record generation unit 113 if the record satisfies a notification condition.

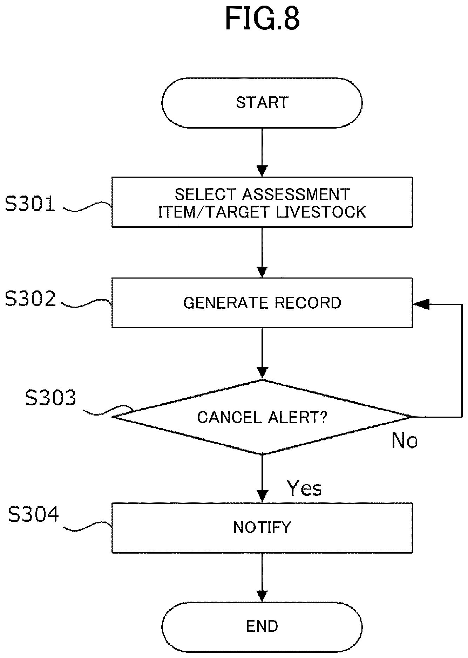

The process flow of the third embodiment will now be described below. FIG. 8 is a flowchart illustrating the flow of the processes of the third embodiment.

In Step S301, an assessment item and target livestock related to the assessment item are selected. Specifically, as the assessment item, a miscarriage rate of breeding livestock bred in October 2019 which is an aggregation period is selected, for example. In accordance with the assessment item, the record generation unit 113 extracts, as target livestock, breeding livestock whose status has transitioned to a status of being in breeding in October 2019.

In Step S302, a record for the assessment item is generated by using the status information and the history information thereof. Specifically, first, the number of target livestock extracted in Step S301 is calculated as a modulus. Then, with reference to the history of the status, breeding livestock whose status has transitioned to miscarriage in a period from breeding to the timing when the record is generated is extracted among the target livestock, and the number of miscarriages is calculated as a numerator. Thereafter, the number of babies miscarried is divided by the modulus, thereby generating the record of a "monthly miscarriage rate in October 2019."

In Step S303, the notification unit 114 determines whether or not the record generated satisfies a notification condition for notifying the user. Specifically, the information storage unit 121 stores, as the notification condition, a condition where the monthly miscarriage rate is equal to or higher than a predetermined value, and when the monthly miscarriage rate included in the record generated by the record generation unit 113 exceeds the predetermined value defined as the notification condition, the notification unit 114 determines that the record satisfies the notification condition for notifying the user.

In Step S304, when the record satisfies the notification condition, the notification unit 114 notifies the user. Specifically, an alert may be issued on a dashboard screen such as shown in FIG. 5, or may be notified by other means such as sending an e-mail to the user.

An example of the record generated in the present embodiment will be described. The example of the record includes breeding records in consideration of the transitions of the status generated in months other than a specific month for events conducted within the specific month, such as a monthly pregnancy rate (the number of mother pigs whose status has transitioned to a status of being pregnant after the conduct of the event / the number of breeding mother pigs per month), a monthly re-estrus rate (the number of mother pigs whose status has transitioned to re-estrus after the conduct of event / the number of breeding mother pigs per month), a monthly childbirth rate (the number of mother pigs (whose status has transitioned to the status after childbirth, such as a status of being in nursing) which have delivered babies after the conduct of event / the number of breeding mother pigs per month), a monthly miscarriage rate (the number of mother pigs whose status has transitioned to miscarriage after the conduction of the event / the number of breeding mother pigs per month), and a monthly death/disuse rate during a breeding period (the number of mother pigs which have died or have been disused after the conduct of event / the number of breeding mother pigs per month).

The record is not limited to a ratio obtained by division such as a rate, but may be the number of livestock reflecting the result of the status transition, such as the number of pregnancies per month and the number of miscarriages per month. In addition to the mother pigs, the record may also be generated for other breeding livestock such as boars and other non-breeding livestock such as fattening pigs. The unit of the period is also not limited to a month, and the record may be generated in any unit such as a year, a week, a day, or a plurality of these units such as two years, three months, two weeks, and 40 days.

As can be seen from the foregoing, in the livestock information management system according to the third embodiment of the present disclosure, a record regarding the status is generated by using the history information stored in the information storage unit 121, and the number of livestock on which the event has been conducted and the number of livestock belonging to the livestock herd on which the event has been conducted, and the number of livestock whose status has transitioned after the conduct of the event and the number of livestock belonging to the livestock herd whose status has transitioned after the conduct of the event included in the event information, thereby obtaining a record from the causes to the results, and accurately checking the transition of the status.

Specifically, the livestock information management server includes the notification unit 114 configured to notify the user of the information on the record, and thus, when the record satisfies the predetermined condition, the user can receive feedback on the record, which allows the user to consider early improvement in management of livestock.

### (Program)

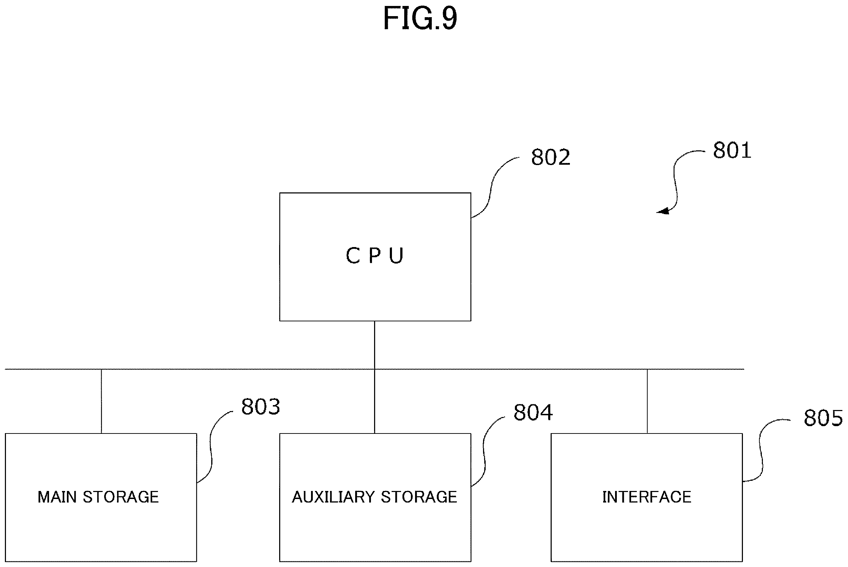

FIG. 9 is a schematic block diagram showing the configuration of a computer 801. The computer 801 includes a CPU 802, a main storage 803, an auxiliary storage 804, and an interface 805.

Here, a program for realizing each function constituting the livestock information management server 101 according to the embodiment will be described in detail.

The livestock information management server 101 is mounted on the computer 801. The operation of each component of the livestock information management server 101 is stored in the auxiliary storage 804 in the form of a program. The CPU 802 reads the program from the auxiliary storage 804, expands the program to the main storage 803, and executes the processes according to the program. In addition, the CPU 802 allocates storage areas corresponding to the above-described storage units in the main storage 803 according to the program.

The program is specifically a livestock information management program configured to manage information on livestock. The livestock information management program causes the computer 801 to execute: a livestock extraction step of determining whether or not the event has been conducted on the livestock or the livestock herd by using history information on a timing at which a status indicating a rearing state of livestock or a livestock herd has transitioned and event schedule master information defining a timing at which an event which is a work to be conducted for rearing the livestock is to be conducted, and, if the determination is no, extracting the livestock or the livestock herd as target livestock on which the event has not been conducted, by a livestock extraction unit.

The auxiliary storage 804 is an example of a non-transitory tangible medium. Other examples of the non-transitory tangible medium include magnetic disks, magneto-optical disks, CD-ROMs, DVD-ROMs, and semiconductor memories, to be connected via the interface 805. Alternatively, if the program is distributed to the computer 801 via the network NW, the computer 801 receiving the distribution may expand the program to the main storage 803, and execute the processes.

The program may realize some of the above-described functions. The program may also be a so-called differential file (differential program) that realizes the above-described functions in combination with other programs which have been stored in the auxiliary storage 804.

Although some embodiments of the present disclosure have been described above, these embodiments can be implemented in various other forms, and various omissions, substitutions, and changes can be made without departing from the spirit of the present disclosure. These embodiments and variations thereof are included in the scope and spirit of the present disclosure, and are also included in the disclosure described in the claims and the equivalent scope thereof. The embodiments have been described above with reference to an example where the livestock is pigs, but the livestock information management system may be applied to other livestock such as cattle and poultry.

### DESCRIPTION OF REFERENCE CHARACTERS

- 1: Livestock Information Management System
- 101: Livestock Information Management Server
- 111: Livestock Extraction Unit
- 112: Status Management Unit
- 113: Record Generation Unit
- 114: Notification Unit
- 121: Information Storage Unit
- 201: Terminal Unit
- 211: Input Unit
- 212: Display Unit
- 213: Display Screen
- 801: Computer
- 802: CPU
- 803: Main Storage
- 804: Auxiliary Storage
- 805: Interface

## Claims

1. A livestock information management system for managing information on livestock, comprising:
an information storage unit configured to store event information indicating an event to be conducted for rearing livestock, event schedule master information defining a timing at which the event is to be conducted, an identifier for identifying the livestock, each individual of a livestock herd, or a livestock herd, status information indicating a status which is a rearing state transitioning by conducting the event on the livestock or livestock herd identified by the identifier, and history information on a timing at which the status has transitioned; and
a livestock extraction unit configured to compare the history information and the event schedule master information with each other, determine whether or not the event has been conducted on the livestock or the livestock herd, and extract, if the determination is no, the livestock or the livestock herd as target livestock on which the event has not been conducted.

2. The livestock information management system of claim 1, wherein
the event includes at least one work selected from a group consisting of acceptance, mating, a pregnancy test, childbirth, nursing, weaning, medication, moving, and shipping.

3. The livestock information management system of claim 1 or 2, wherein
the event schedule master information further includes event interval information indicating information on the event, an order of a next event subsequent to the event, and/or a timing until the next event is conducted, and
the livestock extraction unit calculates an interval from a timing when the status of the livestock or the livestock herd has transitioned to the extraction by using the history information, compares the interval with the event interval defined in the event interval information, and determines whether or not the event has been conducted on the livestock or the livestock herd.

4. The livestock information management system according to any one of claims 1 to 3, wherein
the event information further includes standard workload information indicating a standard workload per unit livestock or livestock herd necessary for conducing the event for each event, and
the livestock extraction unit calculates workload information by using the number of livestock or livestock herds corresponding to the target livestock extracted and the standard workload information, and extracts the target livestock on which the event has not been conducted at a timing corresponding to the workload information.

5. The livestock information management system according to any one of claims 1 to 4, further comprising:
a display unit configured to display information to a user;
an input unit to be operated by the user; and
a status management unit configured to display the target livestock on the display unit and update the status information or withdraw the display of the target livestock by using information input with the input unit for a result of the event conducted on the target livestock.

6. The livestock information management system according to any one of claims 1 to 5, further comprising:
a notification unit configured to notify the target livestock extracted by the livestock extraction unit as a list and/or an alert.

7. A livestock information management system for managing information on livestock, comprising:
an input unit to be operated by the user;
an information storage unit configured to store an identifier for identifying the livestock, each individual of a livestock herd, or a livestock herd and status information indicating a status which is a rearing state of the livestock or the livestock herd identified by the identifier;
a status management unit configured to update the status information by performing an operation of causing the status of the livestock or the livestock herd to transition to an abnormal status with the input unit when an abnormality has occurred in the livestock or the livestock herd; and
a livestock extraction unit configured to extract, by using the status information, the livestock or livestock herd whose status has transitioned to the abnormal status as target livestock, wherein
the status management unit updates the status information when information on an event conducted on the target livestock to address the abnormality is input with the input unit.

8. The livestock information management system of claim 7, wherein
the abnormality includes at least one state of re-estrus, non-pregnant, miscarriage, disease, delayed childbirth, or death, and the event is breeding or disuse corresponding to the abnormality.

9. A livestock information management system for managing information on livestock, comprising:
an information storage unit configured to store event information indicating an event to be conducted for rearing the livestock, an identifier for identifying the livestock, each individual of a livestock herd, or a livestock herd, and status information indicating a status which is a rearing state transitioning by conducting the event on the livestock or livestock herd identified by the identifier; and
a record generation unit configured to generate a record regarding the status by using the number of livestock on which the event has been conducted or the number of livestock belonging to the livestock herd on which the event has been conducted and the number of livestock whose status has transitioned after the conduct of the event or the number of livestock belonging to the livestock herd whose status has transitioned after the conduct of the event.

10. The livestock information management system of claim 9, further comprising:
a notification unit configured to notify a user of information on the record when the record satisfies a predetermined condition.

11. The livestock information management system of any one of claims 1 to 10, wherein
the livestock includes a pig.

12. A livestock information management server for managing information on livestock, comprising:
an information storage unit configured to store event information indicating an event to be conducted for rearing livestock, event schedule master information defining a timing at which the event is to be conducted, an identifier for identifying the livestock, each individual of a livestock herd, or a livestock herd, status information indicating a status which is a rearing state transitioning by conducting the event on the livestock or livestock herd identified by the identifier, and history information on a timing at which the status has transitioned; and
a livestock extraction unit configured to compare the history information and the event schedule master information with each other, determine whether or not the event has been conducted on the livestock or the livestock herd, and extract, if the determination is no, the livestock or the livestock herd as target livestock on which the event has not been conducted.

13. A livestock information management server for managing information on livestock, comprising:
an input unit to be operated by the user;
an information storage unit configured to store an identifier for identifying the livestock, each individual of a livestock herd, or a livestock herd and status information indicating a status which is a rearing state of the livestock or the livestock herd identified by the identifier;
a status management unit configured to update the status information by performing an operation of causing the status of the livestock or the livestock herd to transition to an abnormal status with the input unit when an abnormality has occurred in the livestock or the livestock herd; and
a livestock extraction unit configured to extract, by using the status information, the livestock or livestock herd whose status has transitioned to the abnormal status as target livestock, wherein
the status management unit updates the status information when information on an event conducted on the target livestock to address the abnormality is input with the input unit.

14. A livestock information management server for managing information on livestock, comprising:
an information storage unit configured to store event information indicating an event to be conducted for rearing the livestock, an identifier for identifying the livestock, each individual of a livestock herd, or a livestock herd, and status information indicating a status which is a rearing state transitioning by conducting the event on the livestock or livestock herd identified by the identifier; and
a record generation unit configured to generate a record regarding the status by using the number of livestock on which the event has been conducted or the number of livestock belonging to the livestock herd on which the event has been conducted and the number of livestock whose status has transitioned after the conduct of the event or the number of livestock belonging to the livestock herd whose status has transitioned after the conduct of the event.

15. A livestock information management method for managing information on livestock, comprising:
a livestock extraction step of comparing history information on a timing at which a status indicating a rearing state of the livestock or a livestock herd has transitioned with event schedule master information defining a timing at which an event is to be conducted for rearing the livestock, determining whether or not the event has been conducted on the livestock or the livestock herd, and, if the determination is no, extracting the livestock or the livestock herd as target livestock on which the event has not been conducted, by a livestock extraction unit.

16. A livestock information management method for managing information on livestock, comprising:
a status input step of updating, according to an instruction by a user, a status indicating a rearing state of the livestock or a livestock herd so as to transition to an abnormal status when an abnormality occurs in the livestock or the livestock herd, by a status management unit;
a livestock extraction step of extracting the livestock or livestock herd whose status has transitioned to the abnormal status as target livestock by using the status, by a livestock extraction unit; and
a status management step of updating the status by the status management unit when information on an event conducted on the target livestock to address the abnormality is input with an input unit according to an instruction by the user.

17. A livestock information management method for managing information on livestock, comprising:
a record generation step of generating a record regarding the status by a record generation unit by using the number of livestock on which the event has been conducted or the number of livestock belonging to the livestock herd on which the event has been conducted and the number of livestock whose status which is a rearing state has transitioned after the conduct of the event or the number of livestock belonging to the livestock herd whose status has transitioned after the conduct of the event.

18. A livestock information management program for managing information on livestock, the program causing a computer to execute
a livestock extraction step of comparing history information on a timing at which a status indicating a rearing state of the livestock or a livestock herd has transitioned with event schedule master information defining a timing at which an event is to be conducted for rearing the livestock, determining whether or not the event has been conducted on the livestock or the livestock herd, and, if the determination is no, extracting the livestock or the livestock herd as target livestock on which the event has not been conducted, by a livestock extraction unit.

19. A livestock information management program for managing information on livestock, the program causing a computer to execute
a status input step of updating, according to an instruction by a user, a status indicating a rearing state of the livestock or a livestock herd so as to transition to an abnormal status when an abnormality occurs in the livestock or the livestock herd, by a status management unit;
a livestock extraction step of extracting the livestock or livestock herd whose status has transitioned to the abnormal status as target livestock by using the status, by a livestock extraction unit; and
a status management step of updating the status by the status management unit when information on an event conducted on the target livestock to address the abnormality is input with an input unit according to an instruction by the user.

20. A livestock information management program for managing information on livestock, the program causing a computer to execute
a record generation step of generating a record regarding the status by a record generation unit by using the number of livestock on which an event to be conducted for rearing the livestock has been conducted or the number of livestock belonging to the livestock herd on which the event has been conducted and the number of livestock whose status which is a rearing state has transitioned after the conduct of the event or the number of livestock belonging to the livestock herd whose status has transitioned after the conduct of the event.
